# EUROPEAN PATENT SPECIFICATION

(11) **EP 2 032 588 B1**
(45) Date of publication and mention of the grant of the patent: **08.08.2012**
(21) Application number: 07809283.0
(22) Date of filing: 31.05.2007
(51) Int. Cl.: C07F 7/20

(54) **METHOD FOR PREPARATION OF ALKOXYSILANES HAVING REDUCED HALIDE CONTENT**
VERFAHREN ZUR HERSTELLUNG VON ALKOXYSILANEN MIT REDUZIERTEM HALOGENIDANTEIL
MÉTHODE DE SYNTHÈSE D'ALCOXYSILANES À TENEUR RÉDUITE EN HALOGÉNURES

(30) Priority: 20.06.2006 US 815073 P
(43) Date of publication of application: 11.03.2009
(73) Proprietor: Dow Corning Corporation, Midland, Michigan 48686-0994 (US)
(72) Inventor: FERGUSON, Stephen, Paul, Midland, MI 48642 (US); BAJZER, William, Xavier, Midland, MI 48642 (US); ODUNLAMI, Emmanuel, Babatunde, Grand Ledge, MI 48837 (US)
(74) Representative: Gillard, Richard Edward
(86) International application number: PCT/US2007/013015
(87) International publication number: WO 2007/149201

(56) References cited:
- EP-A- 0 464 819
- EP-A- 0 957 105
- VAN DER PUIL N ET AL: "Patent report(s)" MICROPOROUS AND MESOPOROUS MATERIALS, ELSEVIER SCIENCE PUBLISHING, NEW YORK, US, vol. 27, no. 1, January 1999 (1999-01), pages 108-118, XP004154510 ISSN: 1387-1811 -& JP 10 036377 A (TOAGOSEI CO LTD) 10 February 1998 (1998-02-10)

## Description

### CROSS-REFERENCE TO RELATED APPLICATIONS: NONE

### BACKGROUND OF THE INVENTION

The present invention is a method of preparing alkoxysilanes having reduced halide content. The method comprises contacting a mixture comprising an alkoxysilane, residual halide and a solvent with activated carbon. The resultant alkoxysilanes are more suitable as starting intermediates for the preparation of other chemical compounds and for use in electronic applications.

Alkoxysilanes are produced commercially by a number of techniques including the reaction of chlorosilanes or organochlorosilanes with alcohols. While this reaction is designed to essentially react all chlorosilane materials to alkoxysilanes, residual chloride materials remain. This can be, for example, in the range of 500-1000 ppm chloride on a weight basis relative to the alkoxysilane produced. The residual chloride may be unreacted chlorosilanes or organic chloride material. The source of these organic chlorides may be alkyl chlorides from the direct process reaction to produce organochlorosilanes or the reaction of hydrogen chloride with oleflnic materials that are impurities in the organochlorosilanes. Whatever the source of the chloride impurity, many applications of the alkoxysilanes, such as use as chemical intermediates and for use in electronic applications, require that the residual chloride content be as low as possible.

Methods for reducing chloride content from alkoxysilanes are known in the art. For example, it has been suggested to react the mixture of alkoxysilanes and residual halide with an alkaline metal oxide, an alkaline metal hydroxide or a carbonate to form salts that can be separated from the mixture. Similarly, it has been suggested to react the mixture of alkoxysilanes and residual halide with an alkyl alcohol and an orthoformate to form alkoxysilanes and lower boiling species which can be separated. Finally, it is known to treat residual halide with epoxy compounds to reduce the concentrations.
JP 10 036377 discloses a method for producing a high pure alkoxysilane which comprises bringing the alkoxysilane of the formula Hₙ-Si(OR)₄-ₙ [R is a 1-4 C alkyl; (n) is an integer of 0-2] into contact with an activated carbon or zeolite.
EP 0 957 105 discloses a method for reducing the residual halogen content in alkoxysilanes and alkoxysilane-based compositions comprising treating the alkoxysilane or the alkoxysilane-based composition with activated carbon.

The present inventor has discovered that contacting the mixture of alkoxysilanes and residual halide with activated carbon reduces the level of halide present.

### BRIEF SUMMARY OF THE INVENTION

The present invention relates to a method of preparing an alkoxysilane having reduced halide content. The method comprises contacting a mixture comprising an alkoxysilane described by formula RₐH_{b}Si(OR¹)_{(4-a-b}), residual halide and a solvent with activated carbon, where each R is independently selected from the group consisting of substituted and unsubstituted hydrocarbon groups comprising 1 to about 20 carbon atoms, each R¹ is an independently selected hydrocarbon group comprising 1 to 4 carbon atoms, a=0, 1, 2 or 3, b=0, 1, 2 or 3, and a+b=0 to 3, and wherein the solvent is alcohol. The alkoxysilane is then separated from the activated carbon.

### DETAILED DESCRPTION OF THE INVENTION

The present invention is a method of preparing an alkoxysilane having reduced halide content comprising contacting a mixture comprising an alkoxysilane, residual halide amd a solvent with activated carbon followed by separating the alkoxysilane from the activated carbon.

The mixture comprising the alkoxysilane and residual halide that are treated herein can be formed by nearly any reaction. In one embodiment, the mixture is a result of an alkoxylation reaction. In this reaction, a halosilane is typically reacted with an alcohol to form an alkoxysilane and hydrogen halide. The hydrogen halide is removed from the reaction leaving the mixture comprising an alkoxysilane and residual halide. This residual halide is typically present in amounts greater than about 50 ppm.

In another embodiment, the alkoxysilane and residual halide are the result of reacting ammonia with chloropropyltriethoxysilane to form aminopropyltriethoxysilane. Other reactions which form alkoxysilanes containing residual halide are known in the art and the resultant materials may be purified by the method described herein.

The term "residual halide" as used in the instant invention is the combination of ionic and non-ionic halide species. Ionic halide species include free hydrogen halide and unreacted halosilanes. The non-ionic species include organic halide materials. These organic halide materials are believed to be impurities brought into the alkoxysilane process by the starting halosilane intermediates. These organic halides may be by- products of the alkoxysilane process. Typical halides include chloride, bromide and iodide with chloride being the most common in industry.

The alkoxysilanes used in the method of the present invention are described by the formula RₐH_{b}Si(OR¹)_{(4-a-b)}, where each R is independently selected from the group consisting of substituted and unsubstituted hydrocarbon groups comprising 1 to about 20 carbon atoms, a=0,1,2, or 3, and b=0, 1, 2, or 3, and a+b=0 to 3. R can be an alkyl group, such as, methyl, ethyl, propyl, butyl, pentyl, and hexyl; an alkenyl group, such as, vinyl, allyl and hexenyl; a oycloalkyl group, such as, cyclopropyl, cyclobutyl, cyclopentyl, dicyclopentyl, and cyclohexyl; a cycloalkenyl group, such as, cyclobutenyl, cyclopentenyl and cyclohexenyl; an aryl group, such as, phenyl, tolyl and naphthyl. If the radical R is a substituted hydrocarbon, preferred substituents include the halogens F, Cl, Br and I; cyano radicals; -NR₂ O; S; N; and P. As such, examples of substituted hydrocarbons include chloropropyl, trifluoropropyl, methacryloxypropyl, aminopropyl and the like.

Specific examples of alkoxysilanes include methoxysilanes, ethoxysilanes, and butoxysilanes. These include, but are not limited to, methyldimethoxysilane, methyltrimethoxysilane; dimethyldimethoxysilane, trimethoxysilane, dimethoxysilane, t-butyltrimethoxysilane, t-butylmethyldimethoxysilane, tert-butyltrimethoxysilane, dimethyldiethoxysilane, phenyltriethoxysilane, octadecylvinyldimethoxysilane, phenylmethyldiethoxysilane, diphenyldimethoxysilane, isobutyltrimethoxysilane, actadecyltrimethoxysilane, cyclohexylmethyldimethoxysilane, triethoxysilane, methylvinyldimethoxysilane, triphenylmethoxysilane, 2-phenylpropylmethyldimethoxysilane, methylhexadienyldimethoxysilane, (chloropropyl)trimethoxysilane, (chloropropyl)triethoxysilane, (chloropropyl)dimethylethoxysilane, (3,3,3-trifluaroprapyl)trimethoxysilane, bis-(3, 3,3-trifluoropropyl)dimethoxysilane, dicyclopentyldimethoxysilane, dodecyltrimethoxysilane, 5-hexenyldimethylmethoxysilane, tris-(3,3,3- trifluoropropyl)methoxysilane, methacryloxypropyltrimethoxysilane, and aminopropyltriethoxysilane.

As discussed above, at least a portion of the residual halide present in the mixture may be a by-product of reacting a halosilane with alcohol, where the residual halide is in the form of halosilanes and hydrogen halide. Most of the hydrogen halide can typically be separated by distillation, however the residual halide in the form of halosilanes are not easily separated by distillation because their boiling points are close to that of the alkoxysilanes. The residual halides may include halosilanes such as dimethylchloromethoxysilane, chloropropyldimethylchlorosilane, dimethylchloroethoxysilane, phenylmethylmethoxychlorosilane, dicyclopentylchloromethoxysilane, phenylfluorodiethoxysilane, cyclohexylmethylchloromethoxysilane, and mixtures of residual halides.

It is desirable to reduce the amount of residual halide in the mixture because it may cause the final product to be acidic and lead to the product reverting, polymerizing or degrading upon standing. Alternatively, the halide may have a detrimental effect in its final use — e.g., in the electronics industry or in further reactions.

To remove the residual halide from this mixture according to the present invention, the mixture is contacted with activated carbon. Although it is not critical to the invention, it is postulated that activated carbon may use the physical adsorption process whereby attractive van der Waals forces pull the halide out of solution and onto its surface. In addition, the halide may be attracted to basic sites on the carbon. No matter what the mechanism, the carbon binds the halide so it can be removed from the mixture without adversely affecting the alkoxysilane.

Activated carbon can come from a number of sources. These sources are selected based on design specifications since different raw sources will produce activated carbon with different properties. Some of the more common raw sources include wood, sawdust, lignite, peat, coal, coconut shells, and petroleum residues (e.g., bituminous coal). Characteristics of importance in choosing carbon types include pore structure, particle size, total surface area and void space between particles. Typically, smaller particles with high surface area perform better.

After a source is selected, it is prepared for use. These preparations often include dehydration, carbonization, and/or activation. Dehydration and carbonization involve slow heating of the source, often in anaerobic or under vacuum conditions. Chemicals such as zinc chloride or phosphoric acid can be used to enhance these processes. Activation of carbon requires exposure to additional chemicals or other oxidizing agents such as mixtures of gases.

Adsorption efficiency decreases over time and eventually activated carbon will need to be replaced or reactivated. In one embodiment, the carbon bed can be at least partially reactivated by treatment and/or washing with methanol.

The mixture comprising the alkoxysilane and residual halide is contacted with the activated carbon by standard processes. In one such process, the mixture simply flows through a packed bed of activated carbon. Residence time of the mixture in contact with the activated carbon is not critical and can range, for example, for one minute to 4 days. In one embodiment, the residence time is 5 to 120 minutes at a superficial velocity of about 1 GPM/ft². If desired, this can be done with the aid of solvents such as hydrocarbons, alcohols, and the like. Alcohols are also useful since they tend to increase the adsorption capacity of the activated carbon.

In another method of contacting, the alkoxysilane and residual halide can simply be mixed with the activated carbon for a time sufficient for the activated carbon to bind the chloride followed by separating the mixture from the carbon by, for example, filtering. This can be several minutes to several days depending on the conditions. If desired, this, too, can be done with the aid of solvents such as hydrocarbons, alcohols, and the like.

The temperature of the activated carbon in the contacting step may vary from reduced to elevated temperature. Alternatively, the activated carbon is within a range of temperatures: from negative 50°C to 250°C; from negative 20 °C to 120°C; from 20°C to 120°C; from 80 to 120°C; or from 95°C to above.

The carbon may catalyze some off-gassing, especially for alkoxysilanes having silicon-bonded hydrogen substituents . Maintaining a backpressure may help keep most of the hydrogen in solution. This, in turn, can help to minimize nonuniform velocity through the bed which may result in reduced bed efficiency and premature breakthrough of chloride species.

In addition to removal of the residual halide, the packed bed also removes other impurities. For example, it was found that residual chromium is also adsorbed to the activated carbon. Since chromium is known as a redistribution and alcoholysis catalyst, the resultant silane is also more stable.

The resultant silane has reduced levels of halide. For example, in a processes where chlorosilanes are hydrolyzed with methanol, the residual chloride can be reduced to levels below 50 ppm, alternatively below levels of 25 ppm, and alternatively below levels of 10 ppm.

It should be noted that treatment with activated carbon could be used in conjunction with conventional means of reducing halide content. For example, the alkoxysilane with residual halide could also be treated with alkaline metal oxide, alkaline metal hydroxide, carbonates or orthoformates.

Because of the low halide content, the resultant alkoxysilanes are suitable as starting intermediates for the preparation of other chemical compounds and for use in electronic applications.

### EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention. All percentages are in wt. %.

### Example 1 - Crude Methyldimethoxysilane Solution

A mixture of 30.08 gm of crude methyldimethoxysilane and 0.5278 gm of pulverized bituminous coal-based activated carbon was shaken for about 24 hours at ambient temperature. The crude methyldimethoxysilane consisted of 0.67% by weight methanol, 91.50% methyldimethoxysilane, 6.38% methyltrimethoxysilane and the balance were other high boiling byproducts. The crude methyldimethoxysilane mixture had an initial concentration of 206.1 ppm hydrolyzed chloride. After shaking the mixture was filtered. The final sample contained 25.7 ppm hydrolyzed chloride.

### Comparative Example 2 - Methyldimethoxysilane

A mixture of 30 gm of methyldimethoxysilane and 1.8837 gm of pulverized bituminous coal-based activated carbon was shaken for about 24 hours at ambient temperature. The carbon had been dried in an oven at 100°C for 24 hours prior to use. The methyldimethoxysilane had been distilled to 100% purity as determined by GC, however, it contained 81 ppm chloride. After shaking the sample was filtered and analyzed. The final sample contained 53 ppm hydrolyzed chloride.

### Example 3 - Chloropropyldimethylethoxysilane solution

A mixture of 60.05 gm of chloropropyldimethylethoxysilane solution and 0.5946 gm of pulverized coconut carbon was shaken for about 26 hours at ambient temperature. The chloropropyldimethylethoxysilane solution contained 2.71 % by weight ethanol, 54.50% chloropropyldimethylethoxysilane and the balance was primarily chloropropyldimethylchlorosilane as determined by GC. A titration of the initial chloropropyldimethylethoxysilane solution showed that it contained 91,150 ppm hydrolysable chloride. After shaking the sample was filtered. The final sample contained 1,730 ppm hydrolysable chloride.

### Example 4 - Vinyltrimethoxysilane

Vinyltrimethoxysilane was pumped at about 0.8 gm/min through a fixed bed of 7.6203 gm of coconut carbon. The carbon was dried after it was loaded into the bed at 100°C and -27.5" Hg for about four hours prior to use. The bed was then cooled and purged with nitrogen. It was then filled with 23.4 gm of vinyl trimethoxysilane and allowed to soak for over 16 hours. The vinyltrimethoxysilane feed mixture contained 0.23% by weight methanol as determined by GC and 3.21 ppm hydrolysable chloride as determined by potentiometric titration with silver nitrate. The final solution was analyzed in the same manner. 387.3 gm of final solution was collected and the analysis result of this solution was 0.86 ppm hydrolysable chloride.

### Example 5 - Crude Methyldimethoxysilane Solution

Crude methyldimethoxysilane (93.4% pure with 0.52% methanol) was pumped at about 2.1 gm/min through a fixed bed of 24.3246 gm of reactivated coconut carbon. The carbon was dried at 150°C overnight before being loaded into the bed. After loading the bed with carbon it was purged overnight with nitrogen before use. It was then filled with 35.3 gm of crude methyldimethoxysilane and allowed to soak for over 52 hours. The methyldimethoxysilane feed mixture contained 25.3 ppm hydrolysable chloride as determined by potentiometric titration with silver nitrate. A sample from the bed effluent was collected after more than 17 hours of continuous feed of methyldimethoxy solution and the analysis result was 7.3 ppm hydrolysable chloride. After the bed was saturated with chloride it was drained of liquid, dried overnight with a nitrogen purge, and then rinsed with methanol at ambient temperature to remove adsorbed chloride. Before rinsing, though, it was filled with methanol and allowed to soak for about 43 hours. In total, 2,609 gm of methanol was rinsed through the bed. The carbon was then dried for 8 hours with nitrogen flow. Next, a crude methyldimethoxysilane solution (92.6% pure) containing 0.53 wt% methanol (by GC) and 30 ppm hydrolysable chloride was used to fill the bed and it was allowed to soak for 42 hours. Continuous flow of this solution was then initiated at a rate of around 2.5 gm/min. Two hours after flow was initiated the bed effluent hydrolysable chloride level was measured to be 5.7 ppm chloride using silver nitrate potentiometric titration.

### Example - 6

A crude mixture of 98.72% vinyltrimethoxysilane and 0.89% methanol was pumped through a fixed bed of activated coconut carbon, which had been dried and purged with hot nitrogen prior to use, at a bed temperature of 100 °Celsius. The vinyltrimethoxysilane feed mixture contained 0.95 ppm hydrolysable chloride as determined by potentiometric titration with silver nitrate. Samples were collected after the crude mixture was passed through the carbon bed and the hydrolysable chloride level was measured to be 0.13 ppm chloride using silver nitrate potentiometric titration.

## Claims

1. A method of preparing an alkoxysilane having reduced halide content comprising
(a) contacting a mixture comprising an alkoxysilane described by formula Rₐ H_{b} Si(OR¹)_{(4-a-b)}, residual halide and a solvent with activated carbon, where each R is independently selected from the group consisting of substituted and unsubstituted hydrocarbon groups comprising I to about 20 carbon atoms, each R¹ is an independently selected hydrocarbon group comprising 1 to 4 carbon atoms, a=0, 1, 2 or 3, b=0, 1, 2 or 3, and a+b=0 to 3, and wherein the solvent is alcohol; and
(b) separating the alkoxysilane from the activated carbon.

2. The method of claim 1 wherein the alkoxysilane is methyldimethoxysilane, vinyltrimethoxysilane and chloropropyldimethylethoxysilane.

3. The method according to claim 1 in which the activated carbon is derived from coconut shells or bituminous coal.

4. The method according to claim I in which the mixture comprising the alkoxysilane and residual halide is contacted with the activated carbon by passing said mixture though a packed bed of said activated carbon.

5. The method according to claim 1 in which the mixture comprising the alkoxysilane and residual halide is contacted with the activated carbon by mixing said mixture with said activated carbon followed by filtering to separate the activated carbon from the mixture.

6. The method according to claim 1 in which the resultant alkoxysilane has a halide content less than 10 ppm.

7. The method according to claim 1, wherein a backpressure is maintained during step (a).

8. The method according to claim 1, further comprising
(c) treating the activated carbon separated in step (b) with methanol to form a reactivated carbon; and
(d) contacting the mixture in (a) with the reactivated carbon formed in (c).

9. The method according to claim 8, wherein the amount of residual halide is greater than 50 ppm.

## Patentansprüche

1. Verfahren zur Herstellung eines Alkoxysilans mit vermindertem Halogenidgehalt, umfassend:
a) In-Kontakt-Bringen eines Gemisches, das ein durch die Formel RₐH_{b}Si(OR¹)_{(4-a-b)} beschriebenes Alkoxysilan, Resthalogenid und ein Lösungsmittel umfasst, mit Aktivkohle, wobei jedes R unabhängig ausgewählt ist aus der Gruppe bestehend aus substitutierten und nicht substituierten Kohlenwasserstoffgruppen, die 1 bis ca. 20 Kohlenstoffatome umfassen, jedes R¹ eine unabhängig ausgewählte Kohlenwasserstoffgruppe ist, die 1 bis 4 Kohlenstoffatome umfasst, a = 0, 1, 2 oder 3, b = 0, 1, 2 oder 3 und a + b = 0 bis 3, und wobei das Lösungsmittel Alkohol ist; und
(b) Abtrennen des Alkoxysilans von der Aktivkohle.

2. Verfahren nach Anspruch 1, wobei das Alkoxysilan Methyldimethoxysilan, Vinyltrimethoxysilan und Chlorpropyldimethylethoxysilan ist.

3. Verfahren nach Anspruch 1, bei dem die Aktivkohle aus Kokosnussschalen oder bituminöser Kohle stammt.

4. Verfahren nach Anspruch 1, bei dem das Gemisch, welches das Alkoxysilan und Resthalogenid umfasst, mit der Aktivkohle in Kontakt gebracht wird, indem das Gemisch durch ein Aktivkohle-Festbett geleitet wird.

5. Verfahren nach Anspruch 1, bei dem das Gemisch, welches das Alkoxysilan und Resthalogenid umfasst, mit der Aktivkohle in Kontakt gebracht wird, indem das Gemisch mit der Aktivkohle gemischt wird und anschließend filtriert wird, um die Aktivkohle von dem Gemisch zu trennen.

6. Verfahren nach Anspruch 1, bei dem das erhaltene Alkoxysilan einen Halogenidgehalt von weniger als 10 ppm aufweist.

7. Verfahren nach Anspruch 1, wobei während Schritt (a) ein Gegendruck aufrechterhalten wird.

8. Verfahren nach Anspruch 1, ferner umfassend:
(c) Behandeln der in Schritt (b) abgetrennten Aktivkohle mit Methanol zur Bildung einer reaktivierten Kohle; und
(d) In-Kontakt-Bringen des Gemisches in (a) mit der in (c) gebildeten reaktivierten Kohle.

9. Verfahren nach Anspruch 8, wobei die Menge an Resthalogenid größer als 50 ppm ist.

## Revendications

1. Procédé de préparation d'un alkoxysilane à teneur réduite en halogénure consistant à :
(a) mettre en contact un mélange comprenant un alkoxysilane décrit par la formule Rₐ H_{b} Si(OR¹)₍₄-ₐ-_{b)}, un halogénure résiduel et un solvant avec du charbon activé, dans lequel chaque R est sélectionné indépendamment parmi le groupe constitué de groupes hydrocarbonés substitués et non substitués comprenant de 1 à environ 20 atomes de carbone, chaque R¹ est un groupe hydrocarboné sélectionné indépendamment comprenant de 1 à 4 atomes de carbone, a=0, 1, 2 ou 3, b=0, 1, 2 ou 3, et a+b=0 à 3, et dans lequel le solvant est l'alcool ; et
(b) séparer l'alkoxysilane du charbon activé.

2. Procédé selon la revendication 1, dans lequel l'alkoxysilane est : méthyldiméthoxysilane, vinyltriméthoxysilane et chloropropyldiméthyléthoxysilane.

3. Procédé selon la revendication 1, dans lequel le charbon activé est dérivé des coques de noix de coco ou du charbon bitumineux.

4. Procédé selon la revendication 1, dans lequel le mélange comprenant l'alkoxysilane et l'halogénure résiduel est mis en contact avec le charbon activé en faisant passer ledit mélange par un lit tassé dudit charbon activé.

5. Procédé selon la revendication 1, dans lequel le mélange comprenant l'alkoxysilane et l'halogénure résiduel est mis en contact avec le charbon activé en mélangeant ledit mélange avec ledit charbon activé, suivi d'une filtration afin de séparer le charbon activé dudit mélange.

6. Procédé selon la revendication 1, dans lequel l'alkoxysilane produit a une teneur en halogénure inférieure à 10 ppm.

7. Procédé selon la revendication 1, dans lequel une contre-pression est maintenue pendant l'étape (a).

8. Procédé selon la revendication 1, consistant en outre à
(c) traiter le charbon activé séparé à l'étape (b) avec du méthanol pour former un charbon réactivé ; et
(d) mettre en contact le mélange dans (a) avec le charbon réactivé formé en (c).

9. Procédé selon la revendication 8, dans lequel la quantité d'halogénure résiduel est supérieure à 50 ppm.
